# EUROPÄISCHE PATENTSCHRIFT

(11) **EP 1 012 992 B1**
(45) Veröffentlichungstag und Bekanntmachung des Hinweises auf die Patenterteilung: **04.10.2001**
(21) Anmeldenummer: 98936119.1
(22) Anmeldetag: 09.06.1998
(51) Int. Cl.: H04B 1/18, H01Q 23/00, H01Q 1/32, H01Q 9/32, H04B 1/08

(54) **EMPFÄNGER IN EINEM ANTENNENFUSS**
RECEIVER IN AN ANTENNA BASE
RECEPTEUR LOGE DANS UN SUPPORT D'ANTENNE

(30) Priorität: 09.09.1997 DE 19739395
(43) Veröffentlichungstag der Anmeldung: 28.06.2000
(73) Patentinhaber: ROBERT BOSCH GMBH, 70442 Stuttgart (DE)
(72) Erfinder: ROPPEL, Rüdiger, D-31135 Hildesheim (DE); RODE, Detlef, D-30966 Hemmingen (DE); WIETZKE, Joachim, D-31141 Hildesheim (DE)
(86) Internationale Anmeldenummer: DE9801568
(87) Internationale Veröffentlichungsnummer: WO9913591

(56) Entgegenhaltungen:
- DE-A- 3 915 152
- DE-A- 4 303 110
- US-A- 5 552 921

## Beschreibung

### Stand der Technik

Die Erfindung geht von einem Empfänger, insbesondere einem Rundfunkempfänger zum Einbau in ein Kraftfahrzeug, dessen mit einer Antenne verbundenes Empfangsteil, räumlich von weiteren Komponenten des Empfängers getrennt ist, und von einem Empfangsteil für einen Funkempfänger nach der Gattung der unabhängigen Patentansprüche aus.

Aus der DE 43 03 110 A1 ist ein Empfangssystem für Rundfunk bekannt, das aus Antennenverstärker, Tuner und Niederfrequenzteil besteht. Zur Vermeidung einer in der Regel aufwendigen Verlegung des Antennenkabels von dem Antennenverstärker bzw. der Antenne zum Empfangsteil und zur Reduzierung von Störungen des störanfälligen empfangenen hochfrequenten Rundfunksignals im Zuge seiner Übertragung über das Antennenkabel wird eine Aufspaltung der üblichen Verbindung von Tuner und Niederfrequenzverstärker zugunsten einer unmittelbaren räumlichen Verbindung von Antennenverstärker und Tuner zu einem Schaltungsmodul sowie eine Anordnung dieser Einheit an geeigneter Stelle der Karosserie vorgeschlagen.

Vorteile der Erfindung

Der erfindungsgemäße Empfänger mit den Merkmalen des Hauptanspruchs hat demgegenüber den Vorteil, daß durch räumliche Verbindung des den Tuner umfassenden Empfangsteils eines (Rundfunk-) Empfängers mit der Antenne auch das Antennenkabel zwischen Antenne und Antennenverstärker entfallen kann. Damit ergibt sich eine gegenüber dem Stand der Technik nochmals erhöhte Unempfindlichkeit des empfangenen Rundfunksignals gegenüber eingestreuten Störungen.

Durch Integration des Empfangsteils in den Antennenfuß der Antenne entfällt weiterhin im Falle eines zum Einbau in ein Kraftfahrzeug bestimmten (Rundfunk-) Empfängers die Suche nach einem geeigneten Einbauort für das Empfangsteil, ebenso wie dessen unter Umständen aufwendiger Einbau an dem geeigneten Einbauort.

Weiterhin ergibt sich der Vorteil, daß das Empfangsteil mittels mindestens eines Anschlusses für Steuer- und/oder Nutzdaten in ein komplexes Kommunikationsnetz im Fahrzeug, das neben den Komponenten eines herkömmlichen Rundfunkempfängers weitere sogenannte externe Komponenten wie z. B. ein Compact-Disc-Abspielgerät oder einen Empfänger für GPS-Signale enthalten kann, eingebunden werden kann.

Durch die Auslagerung des die Tunerkomponente umfassenden Empfangsteils in den Antennenfuß werden im Bedienteil, das als Schnittstelle zwischen Benutzer und Kommunikationsnetz ausgebildet ist, Platz für andere Funktionen oder Komponenten frei.

Durch die in den Unteransprüchen aufgeführten Maßnahmen sind vorteilhafte Weiterbildungen und Verbesserungen der in den unabhängigen Ansprüchen angegebenen Empfänger bzw. Empfangsteile möglich.

So ist es von Vorteil, daß das Empfangsteil über den Anschluß für Steuerdaten mit dem Bedienteil, sowie mit weiteren Komponenten verbunden ist. Dadurch ergibt sich bei geeigneter Vernetzung für die Nutzdaten wie z. B. Audiodaten die Möglichkeit zu einer parallelen Nutzung von Signalen verschiedener Audioquellen zur gleichen Zeit an verschiedenen Positionen im Fahrzeug.

Durch die räumliche Trennung des Empfangsteils vom Bedienteil bzw. den weiteren Komponenten des Empfängers verringert sich die Gefahr einer starken wechselseitigen Störung des Tuners und der Geräteprozessoren im Bedienteil.

### Zeichnung

Ausführungsbeispiele der Erfindung sind in der Zeichnung dargestellt und in der nachfolgenden Beschreibung näher erläutert. Es zeigen
Figur 1 eine Antenne, in deren Antennenfuß ein Empfangsteil eines Empfängers angeordnet ist,
Figur 2 ein Blockschaltbild des im Antennenfuß der Antenne angeordneten, den Tuner umfassenden Empfangsteils und
Figur 3 die vernetzten Komponenten in einem Kraftfahrzeug.

### Beschreibung eines Ausführungsbeispiels

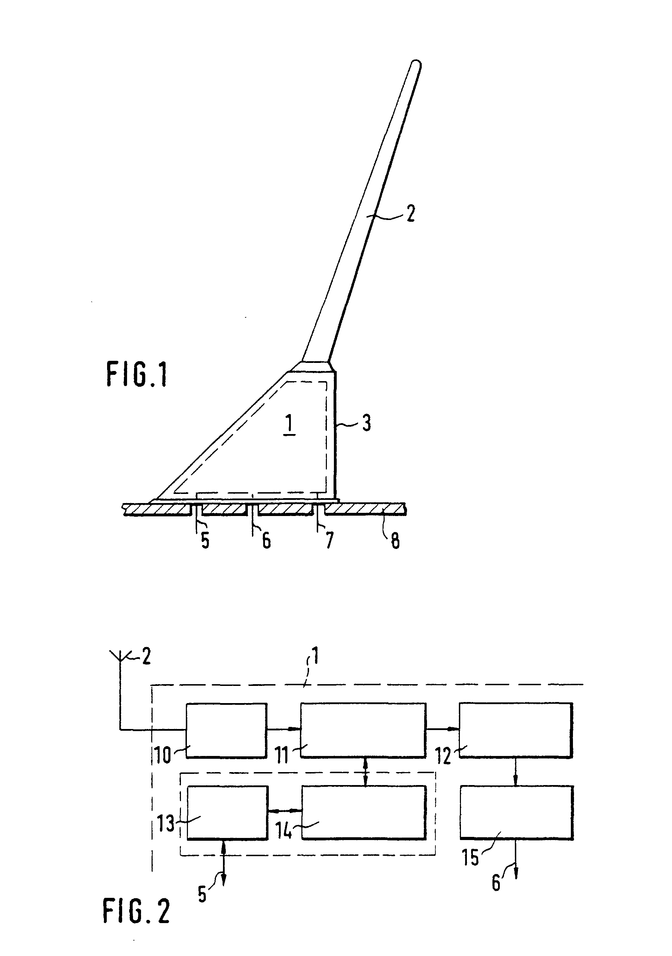

Figur 1 zeigt eine Antenne 2 am Beispiel einer üblicherweise auf dem Dach eines Fahrzeugs angeordneten Fahrzeugantenne in Form einer Kurzstabantenne. Diese weist einen Antennenfuß 3 auf, der unmittelbar auf dem Karosserieblech 8 des Fahrzeugs aufliegt. Bei einem weiteren Ausführungsbeispiel der Erfindung ist es demgegenüber vorgesehen, daß der Antennenfuß 3 der Antenne 2 unterhalb des Karosserieblechs angeordnet ist und nur die Antenne 2 selbst durch das Blech hindurch nach außen geführt ist.

Im Antennenfuß 3 der Antenne 2 ist ein Empfangsteil 1 für einen im Kraftfahrzeug installierten Rundfunkempfänger angeordnet, wobei beim vorliegenden Ausführungsbeispiel zum Zwecke einer erleichterten Reparatur oder des Austausches einer der Komponenten (Antenne / Empfangsteil) das Empfangsteils 1 lösbar mit der Antenne 2 und dem Antennenfuß 3 verbunden ist.

Das Empfangsteil 1 weist einen Stromversorgungsanschluß 7, einen Anschluß 5 für Steuerdaten und einen weiteren Anschluß 6 für Nutzdaten auf, die im vorliegenden Fall jeweils in Form von Leitungen durch Bohrungen im Karosserieblech hindurch in das Fahrzeuginnere geführt sind.

Figur 2 zeigt die Schaltung des Empfangsteils 1, das mit der Antenne 2 verbunden ist. Der Ausgang der Antenne 2 liegt am Eingang eines Vorverstärkers 10 für die hochfrequenten Empfangssignale, im Falle eines Rundfunkempfängers der empfangenen Rundfunksignale an. Der Ausgang des Vorverstärkers 10 ist mit der Empfängerschaltung 11, in der Folge auch als Tuner 11 bezeichnet, verbunden. Der Ausgang der Empfängerschaltung 11 ist in eine Codierschaltung 12 geführt, die wiederum mit einer Anpassungsschaltung 15 verbunden ist, deren Ausgang dem weiteren Anschluß 6 für Nutzdaten entspricht. Die Empfängerschaltung 11 weist eine zusätzliche Verbindung mit einem Mikrocontroller 14 auf, der wiederum mit einem Businterface 13 verbunden ist.

Der Mikrocontroller 14 übernimmt bei dem erfindungsgemäßen Empfangsteil 1 sämtliche Steuerungsfunktionen in der Weise, daß z. B. vom Bedienteil 20 des Rundfunkempfängers abgegebene Befehle wie z. B. für einen Senderwechsel in entsprechende Steuersignale für die Abstimmung des Tuners auf eine andere Sendefrequenz umgesetzt werden.

Das Businterface 13 weist einen Anschluß 5 für Steuerdaten auf. Das von der Antenne 2 abgenommene hochfrequente Antennensignal wird in dem Vorverstärker 10 verstärkt und der Empfängerschaltung 11 zugeleitet. Diese stellt das Empfangssignal in einem Standardformat zur Verfügung, das von einer nachgeschalteten Codierschaltung 12 in ein Format umgewandelt wird, welches sich zur Übertragung über größere Strekken eignet. Ein solches Format ist z.B. durch IEC 958 gegeben, das eine Übertragung über mehrere Meter, z.B. über die Strecke zwischen Antenne mit Empfangsteil und Datensenke, ermöglicht. Bevor das Signal über die mit dem weiteren Anschluß 6 für Nutzsignale verbundene Datenleitung 26 übertragen wird, wird es in der Anpassungsschaltung 15 noch an die Gegebenheiten der Übertragungsstrecke angepaßt. Die Übertragung der Daten in der Datenleitung 26 ist sowohl über abgeschirmte Leitungen als auch beispielsweise über Lichtwellenleiter möglich. In beiden Fällen ist eine Anpassungsschaltung 15 notwendig. Im ersten Fall muß eine Potentialtrennung in der Schaltung vorgenommen werden, im zweiten ist eine Signalwandlung des elektrischen Signals in ein optisches Signal notwendig. Die Steuerung des Empfangsteils 1, d.h. speziell der Empfängerschaltung 11 erfolgt über ein Businterface 13 und den Mikrocontroller 14. Über die Steuerleitung 25, die mit dem Anschluß 5 des Empfangsteils 1 für Steuerdaten verbunden ist, wird z.B. die Empfangsschaltung 11 aktiviert, wenn der Benutzer Radiodaten empfangen möchte.

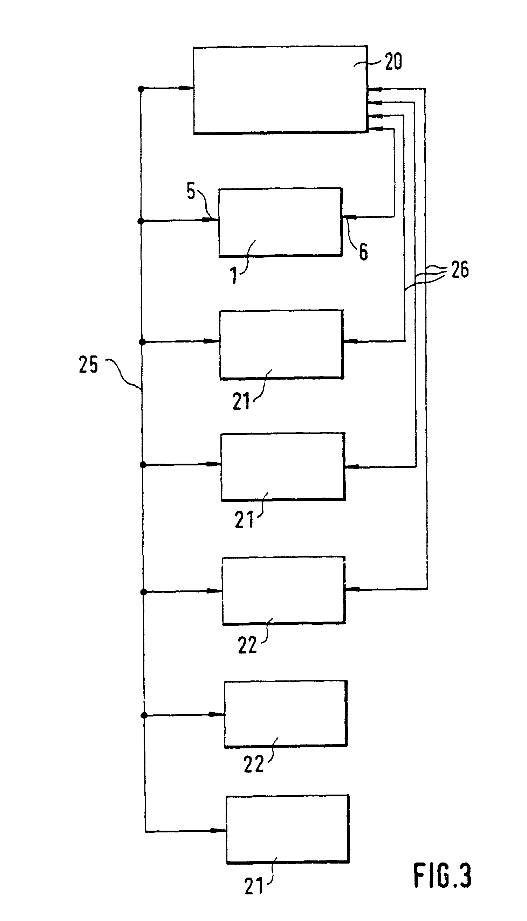

Figur 3 zeigt ein einfaches Beispiel des Kommunikationsnetzes in einem Kraftfahrzeug, bestehend aus der Bedieneinheit 20 des Empfängers, dem Empfangsteil 1 des Empfängers, weiteren Komponenten 21 des Empfängers, wie beispielsweise dem Niederfrequenzverstärker zur Verstärkung der wiederzugebenden Audiosignale oder einer Anzeigeeinheit zur Anzeige beispielsweise des Programmnamens eines aktuell empfangenen Rundfunkprogramms, sowie ggf. an den Empfänger angeschlossener bzw. mit dem Kommunikationsnetzwerk verbundener externer Komponenten 22, wie z. B. einem Abspielgerät für Compact-Discs, einem zusätzlichen Niederfrequenzverstärker zur Verstärkung der wiederzugebenden Audiodaten oder einem Empfänger für mittels des Global Positioning Systems (GPS) übertragener Standortinformationen oder auch einer Navigationseinrichtung.

Die Bedieneinheit 20 ist mit allen aktiven Komponenten über die Datenleitungen 26 verbunden. Der Steueraus- und/odereingang der Bedieneinheit 20 ist mit der Steuerleitung bzw. dem Steuer- und Kontrollbus 25 verbunden, die wiederum einen Anschluß an die Ein-/Ausgänge aller anderen Komponenten 21 des Empfängers und ggf. externer an den Empfänger bzw. das Empfangsteil des Empfängers angeschlossener Komponenten 22 aufweist. Die Komponente aus Empfangsteil 1 und Antenne 2 ist ebenfalls mit der Steuerleitung 25 und der Datenleitung 26 verbunden.

Die Bedieneinheit 20 dient dem Benutzer zum Bedienen des Kommunikationsnetzes. Sie kann an der bisher gebräuchlichen Position eines Autoradiogerätes eingebaut sein, wobei sie selbst Funktionen einzelner Komponenten beinhalten kann. Das Bedienteil 20 kann als reines Bedienteil gestaltet sein oder auch Zusatzfunktionen wie z. B. ein GSM-Telefon beinhalten. Es ist im Rahmen der vorliegenden Erfindung jedoch auch möglich, Sende- und Empfangseinheit eines Mobilfunktelefons ebenso wie beispielsweise einen GPS-Empfänger für die Erfassung von mittels des Global Positioning Systems (GPS) übertragenen Navigationsdaten zusammen mit dem Empfangsteil 1 oder auch als Teil desselben im Antennenfuß 3 der Antenne 1 zu integrieren.

Über das Bedienteil 20 und die Steuerleitung bzw. den Steuerbus 25 werden alle anderen Komponenten 1, 21 des in das Fahrzeug installierten Empfängers sowie die an das Kommunikationsnetz angeschlossenen externen Komponenten 22 angesprochen.

Gemäß einer Weiterbildung der Erfindung ist es auch möglich, Steuer- und Nutz-, wie z. B. Audiodaten, über ein gemeinsames Medium wie Kupferkabel oder Lichtwellenleiter zu übertragen, wobei sowohl Steuer- als auch Nutzdaten auf ein- und denselben Bus zugreifen. Möchte der Benutzer im Frontbereich des Fahrzeugs Radio hören, während im Fond Signale anderer Audioquellen ausgestrahlt werden sollen, so ist das ohne weiteres möglich. Der Benutzer gibt an die Kombination aus Empfangsteil 1 und Antenne 2 den Befehl, den Empfang aktiv zu schalten. Die Radiodaten werden an eine Datensenke, die zur Ausgabe der Daten im Frontbereich des Fahrzeugs geeignet ist, gesendet. Gleichzeitig kann die Bedieneinheit 20 z.B. einen Compakt-Disc-Spieler aktivieren und dessen Datenfluß auf eine weitere Datensenke z.B. einen im Heck des Fahrzeugs angeordneten Lautsprecher oder Kopfhörer ausgeben.

## Patentansprüche

1. Empfänger, insbesondere Rundfunkempfänger zum Einbau in ein Kraftfahrzeug, mit einem Empfangsteil (1), das mit einer Antenne (2) verbunden ist,
wobei das Empfangsteil (1) räumlich von weiteren Komponenten (20, 21) des Empfängers getrennt ist,
**dadurch gekennzeichnet,**
**daß** das Empfangsteil (1) in einem Antennenfuß (3) der Antenne (2) angeordnet ist,
und **daß** das Empfangsteil (1) mindestens einen Anschluß (5) aufweist, über den es mit weiteren Komponenten (20, 21) des Empfängers und/oder zusätzlichen externen Komponenten (22) verbunden und/oder verbindbar ist.

2. Empfänger nach Anspruch 2,
**dadurch gekennzeichnet,**
**daß** das Empfangsteil (1) einen Anschluß (5) für Steuerdaten aufweist,
und **daß** der Anschluß (5) für Steuerdaten an ein mit einem Mikrocontroller (14) verbundenes Businterface (13) angeschlossen ist.

3. Empfänger nach Anspruch 1 oder 2,
**dadurch gekennzeichnet,**
**daß** das Empfangsteil (1) einen weiteren Anschluß (6) für Nutzdaten aufweist,
und **daß** der weitere Anschluß (6) für Nutzdaten über eine Anpaßschaltung (15) an eine Codierschaltung (12) angeschlossen ist, die mit einem Tuner (11) des Empfangsteils (1) verbunden ist.

4. Empfänger nach einem der Ansprüche 1 bis 3, dadurch gekennzeichet, daß das Empfangsteil (1) über einen Anschluß (5) für Steuerdaten mit einem Bedienteil (20) und weiteren Komponenten (21) verbunden ist.

5. Empfänger nach einem der Ansprüche 1 bis 4, dadurch gekennzeichet, daß das Empfangsteil (1) über einen weiteren Anschluß (6) für Nutzdaten mit mindestens dem Bedienteil (20) verbunden ist.

6. Empfangsteil (1) für einen Empfänger, insbesondere für einen zum Einbau in einem Kraftfahrzeug vorgesehenen Rundfunkempfänger, das mit einer Antenne (2) verbunden ist,
**dadurch gekennzeichnet,**
**daß** das Empfangsteil (1) in einem Antennenfuß (3) der Antenne (2) angeordnet ist,
und **daß** das Empfangsteil (1) mindestens einen Anschluß (5) aufweist, über den es mit weiteren Komponenten (20, 21) des Empfängers verbindbar ist.

7. Empfangsteil nach Anspruch 6,
**dadurch gekennzeichnet,**
**daß** das Empfangsteil (1) lösbar im Antennenfuß (3) der Antenne (2) angeordnet ist.

8. Empfangsteil nach Anspruch 6 oder 7,
**dadurch gekennzeichnet,**
**daß** das Empfangsteil (1) sowohl zum Empfang von Rundfunksignalen, als auch zum Senden und Empfangen von Mobiltelefonie-Signalen und/oder zum Empfang von nach dem GPS-Standard übertragenen Navigationsdaten ausgebildet ist

## Claims

1. Receiver, in particular a broadcast radio receiver for installation in a motor vehicle, having a receiving section (1) which is connected to an antenna (2),
with the receiving section (1) being physically separated from further components (20, 21) of the receiver,
**characterized in that**,
the receiving section (1) is arranged in an antenna base (3) of the antenna (2),
and **in that** the receiving section (1) has at least one connection (5) via which it is and/or can be connected to further components (20, 21) of the receiver and/or to additional external components (22).

2. Receiver according to Claim 2,
**characterized in that**,
the receiving section (1) has a connection (5) for control data,
and **in that** the connection (5) for control data is connected to a businterface (13) which is connected to a microcontroller (14).

3. Receiver according to Claim 1 or 2,
**characterized in that**,
the receiving section (1) has a further connection (6) for user data,
and **in that** the further connection (6) for user data is connected via a matching circuit (15) to a coding circuit (12) which is connected to a tuner (11) in the receiving section (1).

4. Receiver according to one of Claims 1 to 3,
**characterized in that** the receiving section (1) is connected via a connection (5) for control data to a control section (20) and to further components (21).

5. Receiver according to one of Claims 1 to 4,
**characterized in that** the receiving section (1) is connected via a further connection (6) for user data to at least the control section (20).

6. Receiving section (1) for a receiver, in particular for a broadcast radio receiver which is intended to be installed in a motor vehicle and is connected to an antenna (2),
**characterized in that**,
the receiving section (1) is arranged in an antenna base (3) of the antenna (2),
and **in that** the receiving section (1) has at least one connection (5) via which it can be connected to further components (20, 21) of the receiver.

7. Receiving section according to Claim 6,
**characterized in that**,
the receiving section (1) is arranged detachably in the antenna base (3) of the antenna (2).

8. Receiving section according to Claim 6 or 7,
**characterized in that**,
the receiving section (1) is designed not only to receive broadcast radio signals but also to transmit and receive mobile telephone signals and/or to receive navigation data transmitted in accordance with the GPS Standard.

## Revendications

1. Récepteur notamment récepteur radio destiné à être monté dans un véhicule comprenant une partie réception (1) reliée à une antenne (2), la partie réception (1) étant séparée des autres composants (20, 21) du récepteur,
**caractérisé en ce que**
- la partie réception (1) est installée dans le pied (3) de l'antenne (2), et
- la partie réception (1) comporte au moins une connexion (5) par laquelle elle peut être reliée à d'autres composants (20, 21) du récepteur et/ou à d'autres composants externes supplémentaires (22).

2. Récepteur selon la revendication 2,
**caractérisé en ce que**
la partie réception (1) comporte une connexion (5) pour des données de commande, et
cette connexion (5) est reliée à une interface de bus (13) reliée à microcontrôleur (14).

3. Récepteur selon l'une des revendications 1 ou 2,
**caractérisé en ce que**
la partie réception (1) comporte une autre connexion (6) pour les données utiles, et
cette autre connexion (6) est reliée par un circuit adaptateur (15) à un circuit de codage (12) lui-même relié par un tuner (11) à la partie réception (1).

4. Récepteur selon l'une quelconque des revendications 1 à 3,
**caractérisé en ce que**
la partie réception (1) est reliée par la connexion (5) pour les données de commande à une partie de commande (20) ainsi qu'à d'autres composants (21).

5. Récepteur selon l'une quelconque des revendications 1 à 4,
**caractérisé en ce que**
la partie réception (1) est reliée par l'autre connexion (6) pour les données utiles à au moins la partie de commande (20).

6. Partie de réception (1) pour un récepteur notamment un récepteur radio destiné à être monté dans un véhicule automobile, relié à une antenne (2),
**caractérisée en ce que**
la partie réception (1) est installée dans le pied (3) de l'antenne (2), et
la partie réception (1) comporte au moins une connexion (5) permettant d'être reliée à d'autres composants (20, 21) du récepteur.

7. Partie de réception selon la revendication 6,
**caractérisée en ce que**
la partie réception (1) est installé de manière amovible dans le pied (3) de l'antenne (2).

8. Partie de réception selon l'une des revendications 6 ou 7,
**caractérisée en ce que**
la partie réception (1) est réalisée à la fois pour la réception de signaux radio et pour l'émission et la réception de signaux de téléphonie mobiles et/ou pour la réception de données de navigation transmises selon le standard GPS.
